# EUROPEAN PATENT SPECIFICATION

(11) **EP 3 157 323 B1**
(45) Date of publication and mention of the grant of the patent: **05.08.2020**
(21) Application number: 15784261.8
(22) Date of filing: 18.06.2015
(51) Int. Cl.: A01G 17/14

(54) **COMPOSITE LOAD BEARING MEMBER**
LASTENTRAGENDES VERBUNDELEMENT
ÉLÉMENT PORTEUR DE CHARGE COMPOSITE

(30) Priority: 18.06.2014 ZA 201404449
(43) Date of publication of application: 26.04.2017
(73) Proprietor: Setevox (Pty) Ltd, 0081 Pretoria (ZA)
(72) Inventor: VENTER, Johann Adriaan, 1929 Vereeniging (ZA)
(74) Representative: Baur & Weber Patentanwälte PartG mbB
(86) International application number: PCT/ZA2015/000044
(87) International publication number: WO 2015/196219

(56) References cited:
- WO-A1-00/18845
- JP-B1- 4 303 780
- KR-A- 20120 128 942
- US-A1- 2005 244 576
- US-A1- 2014 062 126

## Description

### Field of the Invention

The invention relates to a composite load bearing member, such as poles for load bearing applications, in particular composite poles which are light weight. A typical application for such poles is in vineyards to support vines.

### Background to the Invention

Presently load bearing poles are made of wood or concrete, for example, presently in vineyards a popular load bearing pole is made of wood with creosote coating to prolong its useful life.

Furthemore, the pole are preserved with Chromium Copper Arsenic solution prior to being coated with creosote which makes disposal thereof at its life end a problem as it cannot be reused for convention uses.

In KR 2012 0128942 A, a lightweight support bar is shown. In order to improve the durability, the lightweight support bar with high strength comprises a core layer and a strength reinforcing layer. The core layer is made of thermoplastic foam. The outer surface of the core layer is coated with the strength reinforcing layer. The strength reinforcing layer is made of fibreglass reinforced plastic.

The inventors have thus provided a composite load bearing pole as disclosed herebelow to address, at least partially, the above shortcomings and to provide an alternative for those requiring a light weight load bearing pole.

### Summary of the invention

Thus, in accordance with the invention, which is achieved with the appended claims, there is provided a composite load bearing member, such as a pole that can be custom built for any specific design load with the objective of low cost to replace wood support applications for similar loads, typically up to 10 ton yield support load.

The pole has at least two layers but may have three or more layers for applications where UV protection and flame retardancy is paramount, wherein the inside layer consists of a thermoplastic pipe selected from HDPE, PET, and PVC, typically HDPE.

The thermoplastic may or may not contain a flame retardant.

The next layer consists of a thin fibreglass pipe as shell for the thermoplastic to provide strength, wherein this fibreglass pipe is tight fitting with the thermoplastic so that the thermoplastic may be used as a mandrel for the fibreglass pipe which may be manufactured by pultrusion or pullwinding or fibreglass fabric rolling.

The fibreglass resin may be phenolic, epoxy, polyester or vinylester, but typically phenolic resin for its flame resistant properties for outdoor, underground or construction applications. The fibreglass resin may be a polyester resin which is typically used when a fire resistant gel coat is used on the outside of the fibreglass pipe.

The fibreglass fibre orientation inhibits buckling when it is compressed under load in its axial direction and is balanced for high bending strength to withstand bending moment forces.

Where there is a third layer on the outside of the fibreglass pipe, this layer is a painted or coated UV protective layer for extending the life of the pole in outdoor use.

The fibreglass resin itself may be filled with a UV stabilising filler. Typically most applications will be designed for loads between 50 kg and 20 tons for the composite pole whereby the wall thickness and diameter of the thermoplastic pipe and fibreglass are optimised for lowest cost for a specific application and design load.

A typical application for outdoor use of the composite pole is support of vineyards and replacement of the creosote wooden poles, typically for supporting loads between 1 ton and 15 tons.

A benefit of the invention is that the thermoplastic pipe can be separated and recycled or re-used to lower the effective overall lifecycle cost of the product. Benefits of this low cost composite pole includes: light weight, non-corrosive, maintenance free, longevity, non-conductive, high bending strength and vandal resistant.

The invention, which is achieved with the appended claims, provides a composite load bearing member, the composite member having at least an inner thermoplastic pipe and an outer fibreglass pipe with specific wall thickness ratios depending on the load strengths required.

The inner layer may consist of a thermoplastic material selected from HDPE, PET, and PVC. The inner layer may be made of HDPE. The thermoplastic may contain a flame retardant. The thermoplastic may contribute relatively little to the overall load carrying capacity in comparison to the outer layer, and is provided mainly for durability and to increase wall thickness.

HDPE may be the preferred thermoplastic because of its lower brittleness and more elastomeric nature that can withstand high impact e.g. when these supports need to be hit to penetrate the ground/soil. A further benefit is that it also serves as mandrel for the fibreglass outer pipe during the production process where the relative high melting point of HDPE makes it an ideal material.

The second layer consists of a thin fibreglass layer on the outside of the thermoplastic layer to provide strength.

The thermoplastic layer is in the form of a pipe having a wall thickness of from 2 to 10 mm, typically from 3 to 7 mm, more typically from 4 to 6 mm.

The fibreglass layer is in the form of a pipe having a thickness of from 1 to 10 mm, typically from 2 to 7 mm, more typically from 2 to 5 mm.

This fibreglass pipe may be tight fitting onto the thermoplastic pipe since the thermoplastic is used as mandrel for the fibreglass pipe which is manufactured by pultrusion or pullwinding or fibreglass fabric rolling.

The fibreglass resin of the fibreglass layer may be selected from phenolic, epoxy, polyester or vinylester resin. Typically the fibreglass resin is phenolic resin for its flame resistant properties for outdoor applications or underground applications in mining.

A polyester resin may be used when a fire resistant gel coat is applied on the outside of the composite pipe.

The orientation of the fibre of the fibreglass may prevent buckling when it is compressed under load in its axial direction and is balanced for high bending strength to withstand bending moment forces. The fibreglass fibre orientation may vary between 1-49% radial and the balance of the fibre orientation being longitudinal for balancing between hoop strength and longitudinal tensile strength.

Typically, the lay-up is from 60% to 80% longitudinal fibres with the balance of the fibres being radial for hoop strength.

The load bearing member may have a third layer on the outside of the fibreglass layer which is a painted or coated UV protective layer for extending the useful life for outdoor use.

The fibreglass resin itself may be filled with a UV stabilising filler, if needed for a specific application.

A typical application for outdoor use of the composite pole is support of vineyards and replacement of the creosote wooden pole. In this application, the fibreglass is coated with a gel coat for UV protection with a uniform thickness between 250 micron and 500 micron, complying with SABS standard SANS141. The gel coat may provide a weatherproof, UV resistant, flame resistant and impact strong surface in the colour specified. The gel coat is typically a polyester or even an epoxy which may include e.g. hydrated alumina as flame retardant.

The wall thickness ratio of the thermoplastic layer and fibreglass layer may be optimised for lowest cost for a specific application. The wall thickness ratio of thermoplastic to fibreglass varies between 0.7 and 3.0 going from 20 tons yield load down to 1.5 tons therefore there appears to be a measurable inverse relationship between wall thickness ratio and yield load.

The thermoplastic layer may be separated and recycled or re-used to lower the effective overall lifecycle cost of the product. Benefits of this low cost composite pole includes: light weight, non-corrosive, maintenance free, longevity, non-conductive, high bending strength and vandal resistant.

The design of the composite pole wall thickness and diameter can be changed to support any desired weight. Typically most applications will be designed for loads between 50kg and 20 tons for the composite pole. Typical designs for optimising lowest cost can be seen in Table 1 below.

**Table 1: Typical designs for optimising highest strength for lowest cost**

| **Yield load** | **HDPE ID (mm)** | **HDPE OD (mm)** | **Fibreglass ID (mm)** | **Fibreglass OD (mm)** | **Total weight (kg/m)** |
|---|---|---|---|---|---|
| 1.5 ton | 21 | 25 | 25 | 27 | 0.67 |
| 2.5 ton | 28 | 32 | 32 | 34.5 | 1.03 |
| 3 ton | 35 | 40 | 40 | 42.2 | 1.20 |
| 7.5 ton | 71 | 75 | 75 | 78.4 | 3.09 |
| 10 ton | 86 | 90 | 90 | 93.9 | 4.17 |
| 15 ton | 84 | 90 | 90 | 96.7 | 7.14 |

A typical application for outdoor use of the composite pole is support of vineyards and replacement of the creosote wooden pole.

### Description of Embodiments of the Invention

The invention will now be described, by way of non-limiting examples only, with reference to the accompanying representations.

### Example 1:

Composite pole designed for load of 2.5 tons for vineyard or farm fence support. The thermoplastic pipe (with or without flame retardant) has an inside diameter of 28mm and outside diameter of 32mm. The fibreglass shell on the outside of the thermoplastic pipe has an inside diameter of 32mm and outside diameter of 34.5mm (therefore a 2.5mm wall thickness for supplying strength to the thermoplastic for balancing axial load and wind bend moment forces). For this application a phenolic resin will be preferred for flame resistance. A polyester resin can also be used for the fibreglass in the case where the outside gel coat has flame resistant properties. With these dimensions the composite pole will be able to support a load of 2.5 tons before yielding. The fibreglass is then coated with a gel coat in this example for UV protection with a uniform thickness between 250 micron and 500 micron (complying with SABS standard SANS141).

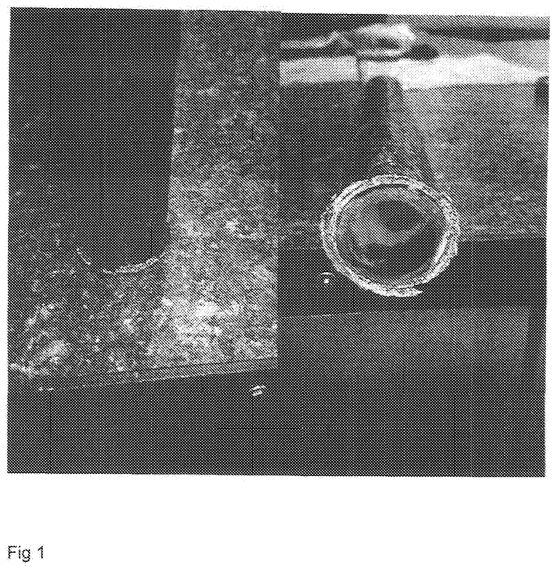

See Figure 1 for actual photos after a yield test.

### Experiments

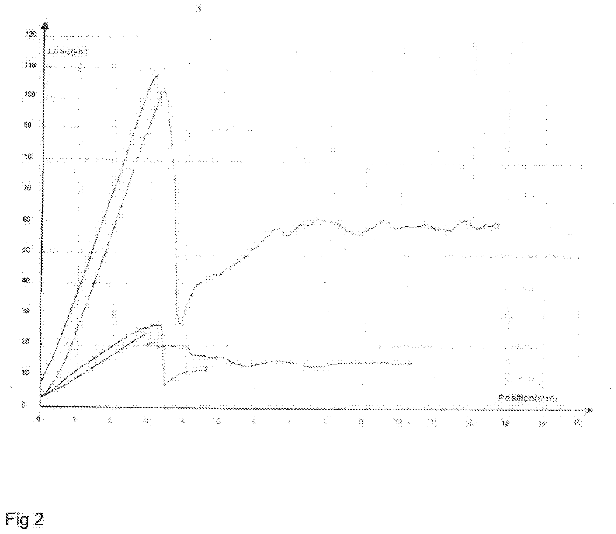

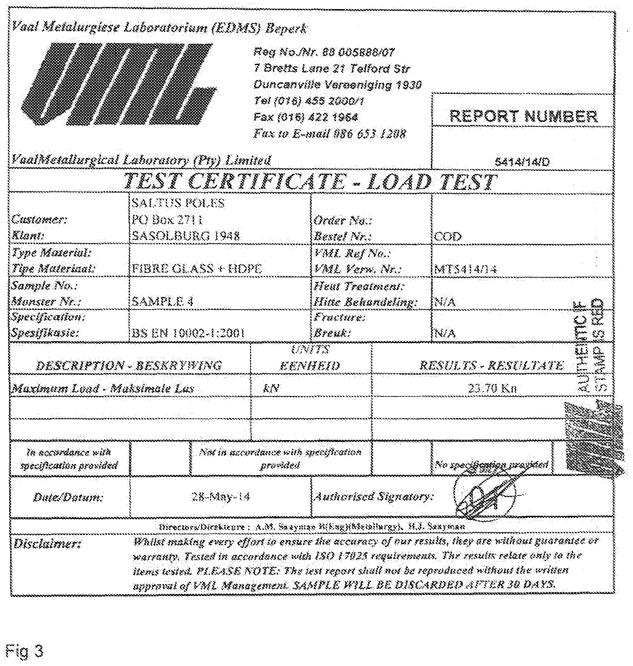

Figures 2 and 3 show axial load test results of composite poles described above.

The Tests were conducted on composite poles as follows:
Test 1: Fibreglass only with ID=26mm and OD=34mm. Not tapered at top.
Test 2: HDPE pipe with ID=26mm and OD=32mm, with Fibreglass shell with ID=32mm and OD=34mm. Fibreglass not tapered at top.
Test 3: Fibreglass only with ID=26mm and OD=34mm. Not tapered at top. Repeat of test 1.
Test 4: HDPE pipe with ID=26mm and OD=32mm, with Fibreglass shell with ID=32mm and OD=34mm. Fibreglass tapered at top to enable slow yielding mechanism.

It can also be noted that test no.4 had a taper and test no.2 had no taper. The effect of gradual deformation on test no.4 is clearly visible.

In Figure 2 there is seen the load deformation graphs for test no.2 and test no.4 which shows a yield load of 2.6 tons and 2.3 tons respectively

All tests shown in Figure 2 were done with a longitudinal (tensile strength) fibre lay-up of 80% with the balance of 20% in the radial (hoop strength) direction. Further tests were done varying the tensile versus hoop strength for optimising the wall thickness of the fibreglass sleeve for lowest cost. Figures 4 and 5 show these test results.

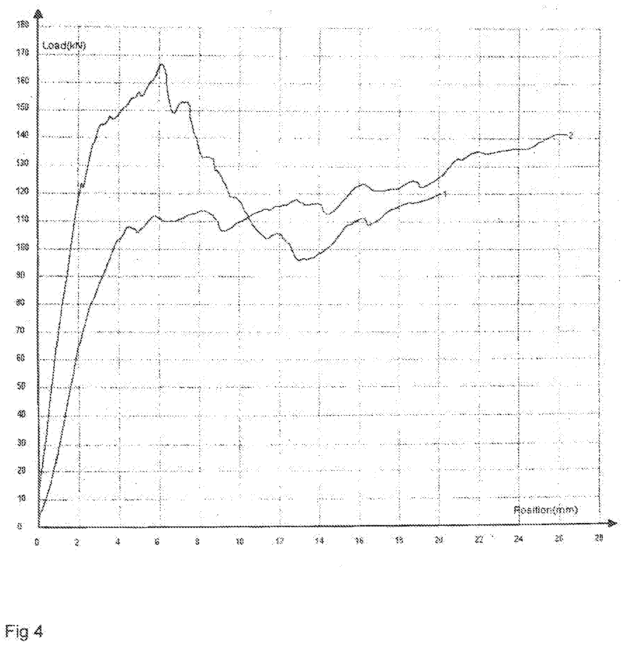

Figure 4 shows two test results from Table 2 below:

**Table 2**

| | HDPE ID (mm) | HDPE OD (mm) | Fibreglass ID (mm) | Fibreglass OD (mm) | Fibreglass fibre tensile to hoop ratio |
|---|---|---|---|---|---|
| Test 1 | 84 | 90 | 90 | 98 | 50:50 |
| Test 2 | 84 | 90 | 90 | 98 | 20:80 |

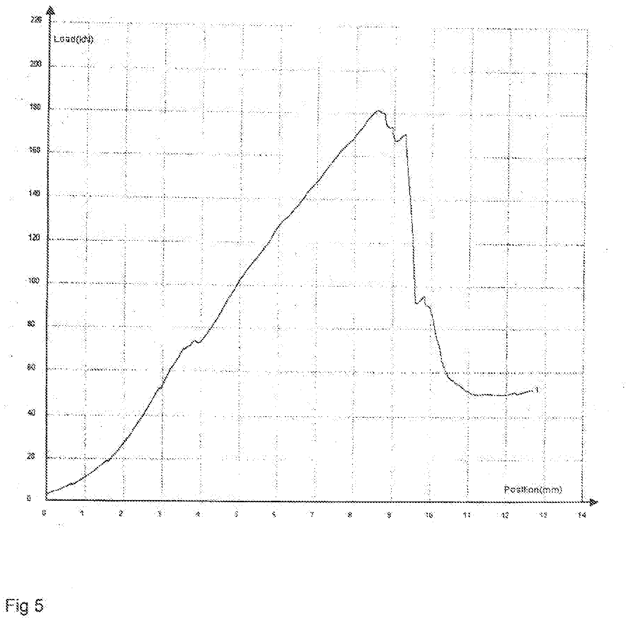

Figure 5 show test results for the following tests in Table 3:

**Table 3**

| | HDPE ID (mm) | HDPE OD (mm) | Fibreglass ID (mm) | Fibreglass OD (mm) | Fibreglass fibre tensile to hoop ratio |
|---|---|---|---|---|---|
| Test 1 | 84 | 90 | 90 | 98 | 80:20 |

The test results show that the maximum yield load (18 tons) is achieved with a tensile to hoop ratio of 80:20. This ratio gives the optimum lowest cost for balancing tensile vs hoop strength. The hoop strength is necessary for handling buckling forces.

The only positive result from the low hoop strength test (Figure 4, test 2, tensile vs hoop ratio of 20:80) was the fact that a slow yielding mechanism was enabled. But this yielding mechanism can also be obtained by tapering the fibreglass pole at the top (reference patent by same inventor ZA2012/05524). Lower hoop strength application might be considered for specific applications where major non-axial forces could be expected.

Figure 4 shows the effect of varying fibreglass tensile vs hoop fibre ratio for the same ID and OD HDPE and fibreglass pole. Test 1 has tensile to hoop ratio of 50:50 and test 2 has tensile to hoop ratio of 20:80

Figure 5 shows Tensile to hoop ratio of 80:20 for same ID and OD pole as shown in Figure 4 This is optimal for the lowest cost with best balance between tensile and hoop strength.

Another design constraint for the fibreglass wall thickness and fibre tensile vs hoop ratio is wind load. The American Association of State Highways and Transportation Officials (AASHTO, 1985) standard for wind loads on signs and luminaires was used to indicate acceptable design tolerances for composite poles. According to this specification the wind load force for a 112 km/h wind will be 365 Pa for a lifetime exposure of 25 years. The maximum allowed deflection for an exposed pole length of 2m is 200mm on the tip (10%deflection allowed on length).

Table 4 below shows the results for deflection as calculated for a wind load force of 112 km/h (365 Pa). As can be seen from the table, all designs are within the specification of 10% deflection of total length above ground. The typical installation height shown is for vineyard support poles. As soon as the tensile to hoop ratio goes above 80:20 the ability of the pole to withstand side impact forces deteriorates and buckling can occur.

**Table 4: Wind load deflection results for typical vineyard support applications.**

| Yield load | HDPE ID (mm) | HDPE OD (mm) | Fibreglass ID (mm) | Fibreglass OD (mm) | Height above ground (m) | Wind Force (N) | Deflection at tip (mm) | Max allowed deflection (10% of length) | Safety factor |
|---|---|---|---|---|---|---|---|---|---|
| 1.5 ton | 21 | 25 | 25 | 27 | 2 | 19.7 | 91 | 200 | 2.2 |
| 2.5 ton | 28 | 32 | 32 | 34.5 | 2 | 25.2 | 43 | 200 | 4.7 |
| 3 ton | 35 | 40 | 40 | 42.2 | 2 | 30.8 | 32 | 200 | 6.3 |
| 7.5 ton | 71 | 75 | 75 | 78.4 | 2 | 57.3 | 7 | 200 | 28.6 |
| 10 ton | 86 | 90 | 90 | 93.9 | 2 | 68.6 | 4 | 200 | 50.0 |

## Claims

1. A composite load bearing member having at least two layers:
(i) an inner thermoplastic layer; and
(ii) an outer fiberglass layer,
**characterized in that** the wall thickness ratio of the inner thermoplastic layer to the outer fiberglass layer is between 0.7 and 3.0 and that yield load can vary from 20 tons down to 1.5 tons,
wherein the thermoplastic layer is in the form of a pipe having a wall thickness of from 4 to 6 mm,
wherein the fibreglass layer is in the form of a pipe having a thickness of from 2 to 5 mm, and
further wherein the fiberglass fibre orientation in the outer fiberglass layer is 60-80% longitudinal and 20-40% radial and the balance of the fibre orientation being longitudinal.

2. The composite member as claimed in claim 1, having a third UV-protective layer on the outside of the outer fiberglass layer.

3. The composite member as claimed in any one of the preceding claims, wherein the inner thermoplastic layer is made of a material selected from HDPE, PET, and PVC.

4. The composite member as claimed in any one of the preceding claims, wherein the resin of the outer fiberglass layer is selected from a phenolic, epoxy, polyester, and vinyl-ester resin.

5. The composite member as claimed in any one of claims 3 to 4, wherein wherein the third UV-protective layer includes a gel coat.

6. The composite member as claimed in claim 5, wherein the gel coat includes polyester or epoxy.

7. The composite member as claimed in claim 5 or claim 6, wherein the gel coat includes a flame retardant.

8. The composite member as claimed in any one of claims 5 to 7, wherein the gel coat has a uniform thickness between 250-500 micron.

9. The composite member as claimed in any one of the preceding claims, wherein the outer fiberglass layer comprises by itself of a UV-stabilizing filler.

10. The composite member as claimed in any one of the preceding claims which is a pole having a length of at least 1 meter.

11. The composite member as claimed in any one of the preceding claims, wherein the outer fiberglass layer gets manufactured by pultrusion or pullwinding or fibreglass fabric rolling.

12. Use of the composite member as claimed in any one of the preceding claims as replacement for wood support members.

## Patentansprüche

1. Lastentragendes Verbundelement, das wenigstens zwei Schichten aufweist:
(i) eine innere thermoplastische Schicht; und
(ii) eine äußere Glasfaserschicht,
**dadurch gekennzeichnet, dass** das Wandstärkenverhältnis zwischen der inneren thermoplastischen Schicht und der äußeren Glasfaserschicht zwischen 0,7 und 3,0 beträgt und der Verformungsbelastungsgrenzwert von 20 Tonnen bis hin zu 1,5 Tonnen variieren kann,
wobei die thermoplastische Schicht die Form eines Rohres mit einer Wandstärke von 4 bis 6 mm aufweist,
wobei die Glasfaserschicht die Form eines Rohres mit einer Wandstärke von 2 bis 5 mm aufweist, und
wobei ferner die Glasfaserorientierung in der äußeren Glasfaserschicht 60-80% längs und 20-40% radial ausgerichtet und der Rest der Faserorientierung längs ausgerichtet ist.

2. Verbundelement gemäß Anspruch 1 mit einer dritten UV-Schutzschicht auf der Außenseite der äußeren Glasfaserschicht.

3. Verbundelement gemäß einem der vorhergehenden Ansprüche, wobei die innere thermoplastische Schicht aus einem aus HDPE, PET und PVC ausgewähltem Material hergestellt ist.

4. Verbundelement gemäß einem der vorhergehenden Ansprüche, wobei das Harz der äußeren Glasfaserschicht aus einem Phenol-, Epoxid-, Polyester und Vinylesterharz ausgewählt ist.

5. Verbundelement gemäß einem der vorhergehenden Ansprüche 3 bis 4, wobei die dritte UV-Schutzschicht eine Gelschicht aufweist.

6. Verbundelement gemäß Anspruch 5, wobei die Gelschicht Polyester oder Epoxid umfasst.

7. Verbundelement gemäß Anspruch 5 oder Anspruch 6, wobei die Gelschicht ein Flammschutzmittel umfasst.

8. Verbundelement gemäß einem der Ansprüche 5 bis 7, wobei die Gelschicht eine gleichmäßige Dicke von 250-500 Mikron aufweist.

9. Verbundelement gemäß einem der vorhergehenden Ansprüche, wobei die äußere Glasfaserschicht selbst einen UV-stabilisierenden Füllstoff aufweist.

10. Verbundelement gemäß einem der vorhergehenden Ansprüche, welches eine Stange mit einer Länge von wenigstens 1 m ist.

11. Verbundelement gemäß einem der vorhergehenden Ansprüche, wobei die äußere Glasfaserschicht durch das Pultrusions- oder Pullwinding-Verfahren oder durch Glasfaser-Gewebewalzen hergestellt wird.

12. Verwendung des Verbundelements nach einem der vorhergehenden Ansprüche als Ersatz für Holztragelemente.

## Revendications

1. Un élément porteur de charge composite ayant au moins deux couches:
(i) une couche thermoplastique intérieure; et
(ii) une couche extérieure en fibres de verre,
**caractérisé en ce que** le rapport d'épaisseur entre la couche thermoplastique intérieure et la couche extérieure en fibres de verre est situé entre 0,7 et 3,0, la charge limite de résistance à la déformation pouvant varier de 20 tonnes à 1,5 tonnes,
dans lequel la couche thermoplastique se présente sous forme d'un tuyau ayant une épaisseur de paroi allant de 4 à 6 mm,
dans lequel la couche en fibres de verre se présente sous forme d'un tuyau ayant une épaisseur allant de 2 à 5 mm, et
dans lequel, en outre, les fibres de verre dans la couche extérieure en fibres de verre sont orientées longitudinalement de 60-80% et radialement de 20-40%, le reste des fibres étant orientées longitudinalement.

2. L'élément composite selon la revendication 1, ayant une troisième couche de protection contre les rayons UV sur l'extérieur de la couche extérieure en fibres de verre.

3. L'élément composite selon l'une quelconque des revendications précédentes, dans lequel la couche thermoplastique intérieure est faite d'un matériau sélectionné à partir de PEHD, PET et PVC.

4. L'élément composite selon l'une quelconque des revendications précédentes, dans lequel la résine de la couche extérieure en fibres de verre est choisie parmi une résine phénolique, époxy, polyester et une résine d'ester de vinyle.

5. L'élément composite selon l'une quelconque des revendications 3 à 4, dans lequel la troisième couche de protection contre les rayons UV comprend une couche de gel.

6. L'élément composite selon la revendication 5, dans lequel la couche de gel comprend un polyester ou époxy.

7. L'élément composite selon la revendication 5 ou la revendication 6, dans lequel la couche de gel comprend un agent ignifugeant.

8. L'élément composite selon l'une quelconque des revendications 5 à 7, dans lequel la couche de gel a une épaisseur uniforme se situant entre 250-500 microns.

9. L'élément composite selon l'une quelconque des revendications précédentes, dans lequel la couche extérieure en fibres de verre comprend elle-même une charge de stabilisation aux rayons UV.

10. L'élément composite selon l'une quelconque des revendications précédentes, qui est un poteau ayant une longueur d'au moins d'un mètre.

11. L'élément composite selon l'une quelconque des revendications précédentes, dans lequel la couche extérieure en fibres de verre est fabriquée par pultrusion ou pullwinding ou par enroulement d'un tissu en fibres de verre.

12. Utilisation de l'élément composite selon l'une quelconque des revendications précédentes en remplacement des éléments de support en bois.
